# EUROPÄISCHE PATENTANMELDUNG

(11) **EP 1 248 238 A2**
(43) Veröffentlichungstag der Anmeldung: **09.10.2002**
(21) Anmeldenummer: 02005698.2
(22) Anmeldetag: 13.03.2002
(51) Int. Cl.: G07C 9/00, G07F 7/10

(54) **Verfahren zur Nutzung von Behördendiensten und entsprechende Vorrichtung**

(30) Priorität: 04.04.2001 DE 10116765
(71) Anmelder: Bundesdruckerei GmbH, 10958 Berlin (DE)
(72) Erfinder: Landvogt, Walter, 14109 Berlin (DE)

(57) **Zusammenfassung**

Es wird ein Verfahren zur Nutzung von Behördendienstleistungen und eine entsprechende Vorrichtung 7 beschrieben, wobei auf einem Datenträger mindestens ein personenbezogener Dateneintrag in einem bestimmten, fest vorgegebenen Format gespeichert ist. Der mindestens eine personenbezogene Dateneintrag wird durch eine von der Behörde beschriebene Datenverarbeitungsanlage 10 in dem entsprechenden Format gelesen und mit einem entsprechenden personenbezogenen Dateneintrag im Behördenregister verglichen. Bei der Übereinstimmung dieser Daten werden die Behördendienstleistungen für den Benutzer freigeschaltet, bei Nichtübereinstimmung der Daten erfolgt die Freischaltung der Behördendienstleistungen nicht.

## Beschreibung

### Stand der Technik

Die Erfindung geht aus von einem Verfahren zur Nutzung von Behördendienstleistungen und einer entsprechenden Vorrichtung nach Gattung der unabhängigen Ansprüche.

Es sind bereits Verfahren zur Nutzung von verschiedenen Dienstleistungen und entsprechende Vorrichtungen bekannt, bei denen mit Hilfe von Datenträgern ein Zugang zu den Dienstleistungen ermöglicht wird, wobei auf den Datenträgern Daten in verschiedenster Form gespeichert sind. Beispielhaft seien hier Verfahren zum Abheben von Geld bzw. Geldautomaten genannt, bei denen Daten von einer Geldkarte gelesen werden und durch die Eingabe eines PIN-Codes das Abheben von Geld von dem jeweiligen zugehörigen Konto ermöglicht wird.

### Vorteile der Erfindung

Das erfindungsgemäße Verfahren und die erfindungsgemäße Vorrichtung mit den Merkmalen der unabhängigen Ansprüche haben demgegenüber den Vorteil, daß es dem Nutzer auf einfache und schnelle Art und Weise ermöglicht wird, Behördendienstleistungen in Anspruch zu nehmen. Des weiteren ist vorteilhaft, daß auch für die Behörde die in Anspruch genommenen Dienstleistungen einfach nachvollziehbar und somit Einsparungen im Personalaufwand möglich sind. Ein weiterer Vorteil des erfindungsgemäßen Verfahrens und der erfindungsgemäßen Vorrichung besteht darin, daß der Datenträger mit den entsprechenden personenbezogenen Daten auch für andere Anwendungen nutzbar ist, so daß auch Vorgänge, die sich der entsprechenden personenbezogenen Daten bedienen, bspw. das Ausdrucken von personenbezogenen Formularen, ohne Rückfrage bei der entsprechenden Behörde mit großer Sicherheit einfach durchführbar sind.

Durch die in den Unteransprüchen aufgeführten Maßnahmen sind vorteilhafte Weiterbildungen und Verbesserungen des im unabhängigen Anspruch angegebenen Verfahrens sowie der in dem unabhängigen Anspruch angegebenen Vorrichtung möglich. Besonders vorteilhaft ist dabei, daß die Benutzung einer Signatur, die bei der Inanspruchnahme der Behördendienstleistungen übersendeten Daten sicher macht. Des weiteren ist vorteilhaft, daß mittels einer auf dem Datenträger enthaltenen Geldkartenfunktion die in Anspruch genommenen Behördendienstleistungen sofort bezahlt werden können. Die zusätzliche Abfrage eines PIN-Codes oder die Erfassung biometrischer Daten des Nutzers und der Vergleich mit entsprechenden Daten, die auf dem Datenträger enthalten sind, vor Lesen der auf dem Datenträger gespeicherten personenbezogenen Daten oder vor der Ausführung des Vergleichs ist außerdem vorteilhaft, da so die Sicherheit der Benutzung ebenfalls erhöht wird.

### Zeichnungen

Ausführungsbeispiele der Erfindung werden unter Zuhilfenahme von Zeichnungen dargestellt und in der nachfolgenden Beschreibung näher erläutert. Es zeigen:
Figur 1 einen Datenträger (schematisch) und
Figur 2 eine Vorrichtung zur Nutzung von Behördendienstleistungen (schematisch).

### Beschreibung der Ausführungsbeispiele

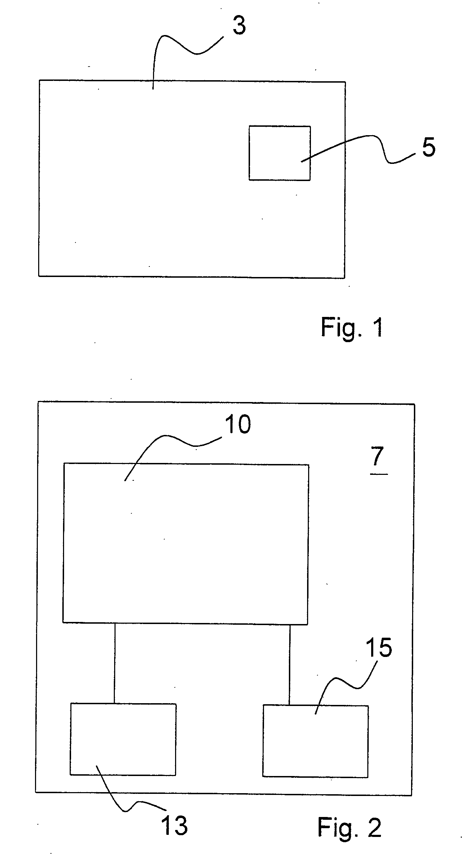

Um einen Bürger einen einfachen Zugang zu behördlichen Dienstleistungen zu erlauben, erhält der Bürger einen Datenträger 3, vorzugsweise eine Chipkarte, die in einem Speicherelement 5 personenbezogene Daten enthält. Ein derartiger Datenträger 3 ist in Figur 1 schematisch dargestellt. Derartige Daten können beispielsweise der Vorname, der Familienname, der Geburtsname, der Geburtstag, der Geburtsort, das Geschlecht, die Anschrift (mit der Postleitzahl, dem Wohnort, der Straße und der Hausnummer) sowie die Anzahl der Kinder und/oder der Familienstand sein. Diese Daten werden auf dem Datenträger 3 vorzugsweise verschlüsselt abgelegt. Des weiteren können solche Daten auch mit einer Signatur der ausstellenden Behörde versehen sein. Möchte der Bürger nun bestimmte Dienstleistungen mit einer Vorrichtung zur Nutzung von Behördendienstleistungen 7 in Anspruch nehmen, dann kann er beispielsweise eine Datenverarbeitungsanlage 10 benutzen, die außerdem Mittel 13 aufweist, mit Hilfe derer die Daten vom Datenträger 3 gelesen werden können. Eine derartige Vorrichtung ist anhand von Figur 2 schematisch dargestellt. Die Leseeinrichtung 13 für den Datenträger ist mit der Datenverarbeitungsanlage 10 verbunden. Möchte der Nutzer nun Dienstleistungen der Behörde mit einer Vorrichtung 7 nutzen, so gibt er den Datenträger 3 so in die Datenverarbeitungsanlage ein, daß die auf dem Datenträger 3 gespeicherten Daten mittels der Leseeinrichtung 13 gelesen werden können. Diese Daten, die personenbezogene Daten wie oben angegeben darstellen, sind in einem bestimmten Format, das von dem Datenverarbeitungssystem lesbar ist, auf dem Datenträger 3 gespeichert. Die Daten entsprechen einem Teilauszug des Melderegister-Eintrags des Bürgers. In einem nächsten Schritt werden die personenbezogenen Daten von dem Datenträger 3 mit in einem zentralen Melderegister gespeicherten personenbezogenen Daten verglichen. Ergibt der Vergleich mindestens eines fest vorgegebenen Teils der auf dem Datenträger 3 gespeicherten personenbezogenen Daten mit einem entsprechenden Teilauszug aus dem Melderegister, daß diese Daten übereinstimmen, dann werden bestimmte Dienstleistungen der Behörde für den Nutzer freigeschaltet. Der Nutzer ist nun in der Lage, mit Hilfe der Datenverarbeitungsanlage 10 Dienstleistungen der Behörde zu nutzen. Im Falle einer Nichtübereinstimmung der auf dem Datenträger 3 gespeicherten personenbezogenen Daten mit dem entsprechenden Auszug aus dem Melderegister, werden die Dienstleistungen der Behörde für den Nutzer nicht freigeschaltet und es erscheint eine Fehlermeldung. In einem bevorzugten Ausführungsbeispiel können für den jeweiligen Nutzer, abhängig von der Nutzerart, nur bestimmte Dienstleistungen der Behörde freigeschaltet werden. Dies ist dann abhängig von den Eintragungen im Melderegister für den jeweiligen Benutzer, der sich über den Datenträger 3 identifiziert hat. Ein Unterscheidungskriterium kann beispielsweise das Alter darstellen.

Die von der Behörde angebotenen Dienstleistungen können beispielsweise Änderungen des Wohnortes des Nutzers, d.h. Abmeldung am alten Wohnort und/oder Anmeldung am neuen Wohnort oder die Eintragung eines neuen zusätzlichen Wohnortes, die Beantragung von Lohnsteuerkarten, die Beantragung von Ausweispapieren, die An- und/oder Abmeldung von Kraftfahrzeugen oder die Ummeldung von Kraftfahrzeugen sein. Des weiteren kann der Nutzer der jeweiligen Behörde individuelle Mitteilungen zukommen lassen oder aber individualisierte Informationen von der Behörde bekommen und/oder individualisierte Anträge für die Vorlage bei der jeweiligen Behörde ausdrucken.

In einem weiteren bevorzugten Ausführungsbeispiel ist auf dem Datenträger 3 weiterhin eine Signatur enthalten, mittels der die vom Nutzer zur Behörde übertragenen Daten signiert werden können. Der Benutzer unterschreibt somit mit der Signatur die übertragenen Daten und kann so die Echtheit der Daten gewährleisten.

In einem weiteren bevorzugten Ausführungsbeispiel sind die auf dem Datenträger gespeicherten personenbezogenen Daten jeweils mit einer Signatur versehen, die einer ausstellenden Behörde zugeordnet werden kann. Anhand dieser Signatur werden die Daten als echt erkannt. In diesem Ausführungsbeispiel werden die gelesenen Daten des Datenträgers erst mit den Eintragungen im zentralen Melderegister verglichen, wenn die zu den Daten des Datenträgers zugehörigen Signaturen überprüft wurden.

In einem bevorzugten Ausführungsbeispiel gibt der Benutzer vor dem Lesen seiner personenbezogenen Daten von dem Datenträger zunächst einen PIN-Code ein, der mit einem auf dem Datenträger gespeicherten PIN-Code verglichen wird. Ergibt der Vergleich des eingegebenen PIN-Codes mit dem auf dem Datenträger gespeicherten PIN-Code, daß diese übereinstimmen, wird das Lesen der personenbezogenen Daten von dem Datenträger 3 aktiviert. In einem anderen Ausführungsbeispiel wird bei Übereinstimmung der PIN-Codes nach dem Lesen der auf dem Datenträger gespeicherten personenbezogenen Daten der Vergleich der gelesenen Daten mit den im zentralen Melderegister gespeicherten personenbezogenen Daten aktiviert. In einem anderen bevorzugten Ausführungsbeispiel wird das Lesen der auf dem Datenträger gespeicherten personenbezogenen Daten oder der Vergleich der gelesenen Daten mit den im zentralen Melderegister gespeicherten personenbezogenen Daten erst dann aktiviert, wenn biometrische Daten, die vom Benutzer erfaßt wurden, mit den entsprechenden Daten, die auf dem Datenträger gespeichert sind, verglichen wurden und dieser Vergleich eine Übereinstimmung der Daten ergab. Derartige biometrische Daten können beispielsweise Merkmale des Fingerabdrucks des Benutzers oder Merkmale des Gesichts sein. Dabei weist die Vorrichtung zur Nutzung von Behördendienstleistungen in diesem Ausführungsbeispiel zur Erfassung der biometrischen Daten eine Fingerabdruck-Erfassungseinheit auf, die den Fingerabdruck des Benutzers erfaßt und die den Merkmalen des Fingerabdrucks entsprechenden Daten erzeugt, oder eine Kamera-Einheit auf, die das Abbild des Gesichts des Benutzers erfaßt und die den Merkmalen des Gesichts entsprechenden Daten erzeugt. Eine derartige Fingerabdruck-Erfassungseinheit oder Kamera-Einheit ist mit der Datenverarbeitungsanlage 10 verbunden. In einem Ausführungsbeispiel der Erfindung können die Merkmale des Gesichts des Bürgers auf dem Datenträger in Form eines Fotos gespeichert sein.

Einige der vom Bürger in Anspruch genommenen Dienstleistungen können zu Änderungen im Melderegister führen. Diese Eintragungen werden entsprechend der vom Nutzer eingegebenen Änderungen in der jeweiligen Datenbank aktualisiert und gespeichert. Bei der nächsten Abfrage stehen somit die aktualisierten Daten zur Verfügung.

Einige der vom Nutzer in Anspruch genommenen Behördendienstleistungen führen auch zu einer Änderung der auf dem Datenträger 3 im Speicherelement 5 gespeicherten Daten. Um eine Änderung der gespeicherten Daten auf dem Datenträger 3 zu erreichen, ist an der von dem Benutzer verwendeten Datenverarbeitungsanlage ein Schreibelement 15 vorgesehen, so daß neue, geänderte personenbezogene Daten in das auf dem Datenträger 3 vorgesehene Speicherelement 5 geschrieben werden können. Das Schreibelement 15 ist dabei, wie in Figur 2 dargestellt, mit der Datenverarbeitungsanlage 10 verbunden. Des weiteren werden diese Daten in einem weiteren bevorzugten Ausführungsbeispiel zusätzlich mit einer Behördensignatur versehen, so daß die Herkunft der Daten eindeutig charakterisiert werden kann und eine unbefugte Änderung verhindert wird.

Als Behördendienstleistungen werden im Rahmen dieser Offenbarung beispielsweise die Abmeldung am alten Wohnort und/oder die Anmeldung am neuen Wohnort und/oder die Beantragung von Lohnsteuerkarten und/oder die Anmeldung von Kraftfahrzeugen und/oder die Abmeldung von Kraftfahrzeugen und/oder die Ummeldung von Kraftfahrzeugen angesehen.

Das erfinderische Verfahren sowie die erfinderische Vorrichtung zur Nutzung von Behördendienstleistungen hat weiterhin den Vorteil, daß der Bürger jederzeit im Besitz seiner Meldedaten ist und diese zu einem von Behördenöffnungszeiten unabhängigen Zeitpunkt zur Nutzung von Behördendienstleistungen und anderen Dienstleistungen verwenden kann. Dies vereinfacht das Verfahren sowohl für den Benutzer als auch für die jeweilige Behörde. Beispielsweise werden auch für Vorgänge bei Bankinstituten Adressbestandteile benötigt, die direkt von dem Datenträger 3 mit dem Meldedatensatz, der sogenannten Bürgerkarte, heruntergeladen werden können.

Als Datenträger 3 können für die vorliegende Erfindung nicht nur Chipkarten verwendet werden, sondern auch beispielsweise Pässe, Personalausweise oder andere Datenträger 3 wie Disketten oder CD's, die in der Lage sind, die entsprechenden personenbezogenen Daten zu speichern.

## Patentansprüche

1. Verfahren zur Nutzung von Behördendienstleistungen, wobei auf einem Datenträger (3) mindestens ein personenbezogener Dateneintrag in einem bestimmten, fest vorgegebenen Format in einem Speicherelement (5) gespeichert ist, **dadurch gekennzeichnet, daß** der mindestens eine personenbezogene Dateneintrag durch eine Datenverarbeitungsanlage (10) in dem entsprechenden Format gelesen wird, der mindestens eine personenbezogene Dateneintrag mit dem entsprechenden mindestens einen personenbezogenen Dateneintrag im Behördenregister verglichen wird, wobei bei Übereinstimmung des auf dem Datenträger (3) gespeicherten, mindestens einen personenbezogenen Dateneintrags mit dem im Behördenregister gespeicherten, mindestens einen personenbezogenen Dateneintrag eine Freischaltung der Behördendienstleistungen erfolgt und bei Nichtübereinstimmung des auf dem Datenträger (3) gespeicherten, mindestens einen personenbezogenen Dateneintrags mit dem im Behördenregister gespeicherten, mindestens einen personenbezogenen Dateneintrag die Freischaltung der Behördendienstleistungen nicht erfolgt.

2. Verfahren nach Anspruch 1, **dadurch gekennzeichnet, daß** zur Bestätigung von genutzten Behördendienstleistungen eine auf dem Datenträger (3) gespeicherte Signatur genutzt wird.

3. Verfahren nach einem der Ansprüche 1 oder 2, **dadurch gekennzeichnet, daß** mittels einer auf dem Datenträger (3) enthaltenen Geldkartenfunktion die genutzten Behördendienstleistungen bezahlt werden.

4. Verfahren nach einem der Ansprüche 1 bis 3, **dadurch gekennzeichnet, daß** das Lesen des auf dem Datenträger (3) gespeicherten, mindestens einen personenbezogenen Dateneintrags durch die von der Behörde betriebene Datenverarbeitungsanlage oder der Vergleich des auf dem Datenträger (3) gespeicherten, mindestens einen personenbezogenen Dateneintrags mit dem im Behördenregister gespeicherten, mindestens einen personenbezogenen Dateneintrag erst nach der Eingabe eines richtigen PIN-Codes durchgeführt wird.

5. Verfahren nach einem der Ansprüche 1 bis 3, **dadurch gekennzeichnet, daß** das Lesen des auf dem Datenträger (3) gespeicherten, mindestens einen personenbezogenen Dateneintrags durch die von der Behörde betriebene Datenverarbeitungsanlage oder der Vergleich des auf dem Datenträger (3) gespeicherten, mindestens einen personenbezogenen Dateneintrags mit dem im Behördenregister gespeicherten, mindestens einen personenbezogenen Dateneintrag erst nach Vergleich und Übereinstimmung von biometrischen Daten des Benutzers, die durch eine Einrichtung zur Messung der biometrischen Daten erfaßt werden, mit biometrischen Daten, die auf dem Datenträger (3) gespeichert sind, durchgeführt wird.

6. Verfahren nach Anspruch 5, **dadurch gekennzeichnet, daß** biometrische Daten Merkmale des Fingerabdrucks oder Merkmale des Gesichts sind.

7. Verfahren nach einem der Ansprüche 1 bis 6, **dadurch gekennzeichnet, daß** mittels mindestens einer Behördendienstleistung der auf dem Datenträger (3) gespeicherte, mindestens eine personenbezogene Dateneintrag verändert wird.

8. Verfahren nach einem der Ansprüche 1 bis 7, **dadurch gekennzeichnet, daß** Behördendienstleistungen die Abmeldung am alten Wohnort und/oder die Anmeldung am neuen Wohnort und/oder die Beantragung von Lohnsteuerkarten und/oder die Anmeldung von Kraftfahrzeugen und/oder die Abmeldung von Kraftfahrzeugen und/oder die Ummeldung von Kraftfahrzeugen umfaßt.

9. Verfahren nach einem der Ansprüche 1 bis 8, **dadurch gekennzeichnet, daß** der mindestens eine, auf dem Datenträger (3) gespeicherte, personenbezogene Dateneintrag der Vorname und/oder der Familienname und/oder der Geburtsname und/oder das Geburtsdatum und/oder der Geburtsort und/oder die Anschrift des Erstwohnsitzes und/oder die Anschrift des Zweitwohnsitzes und/oder das Geschlecht und/oder der Familienstand und/oder die Anzahl der Kinder ist.

10. Vorrichtung zur Nutzung von Behördendienstleistungen (7), **dadurch gekennzeichnet, daß** erste Mittel (13) vorhanden sind, so daß mindestens ein personenbezogener Dateneintrag durch eine Datenverarbeitungsanlage (10) in einem bestimmten, fest vorgegebenen Format von einem Datenträger (3) gelesen wird, wobei der mindestens eine personenbezogene Dateneintrag auf dem Datenträger (3) in dem entsprechenden Format gespeichert ist, wobei zweite Mittel vorhanden sind, so daß der mindestens eine personenbezogene Dateneintrag mit dem entsprechenden mindestens einen personenbezogenen Dateneintrag im Behördenregister verglichen wird, wobei bei Übereinstimmung des auf dem Datenträger (3) gespeicherten, mindestens einen personenbezogenen Dateneintrags mit dem im Behördenregister gespeicherten, mindestens einen personenbezogenen Dateneintrag eine Freischaltung der Behördendienstleistungen mittels dritter Mittel erfolgt und bei Nichtübereinstimmung des auf dem Datenträger (3) gespeicherten, mindestens einen personenbezogenen Dateneintrags mit dem im Behördenregister gespeicherten, mindestens einen personenbezogenen Dateneintrag die Freischaltung der Behördendienstleistungen nicht erfolgt.

11. Vorrichtung nach Anspruch 10, **dadurch gekennzeichnet, daß** vierte Mittel vorhanden sind, so daß zur Bestätigung von genutzten Behördendienstleistungen eine auf dem Datenträger (3) gespeicherte Signatur genutzt wird.

12. Vorrichtung nach einem der Ansprüche 10 oder 11, **dadurch gekennzeichnet, daß** fünfte Mittel vorhanden sind, so daß die genutzten Behördendienstleistungen mittels einer auf dem Datenträger (3) enthaltenen Geldkartenfunktion bezahlt werden.

13. Vorrichtung nach einem der Ansprüche 10 bis 12, **dadurch gekennzeichnet, daß** sechste Mittel vorgesehen sind, so daß das Lesen des auf dem Datenträger (3) gespeicherten, mindestens einen personenbezogenen Dateneintrags durch die von der Behörde betriebene Datenverarbeitungsanlage oder der Vergleich des auf dem Datenträger (3) gespeicherten, mindestens einen personenbezogenen Dateneintrags mit dem im Behördenregister gespeicherten, mindestens einen personenbezogenen Dateneintrag erst nach der Eingabe eines richtigen PIN-Codes durchgeführt wird.

14. Vorrichtung nach einem der Ansprüche 10 bis 12, **dadurch gekennzeichnet, daß** siebte Mittel vorgesehen sind, so daß das Lesen des auf dem Datenträger (3) gespeicherten, mindestens einen personenbezogenen Dateneintrags durch die von der Behörde betriebene Datenverarbeitungsanlage oder der Vergleich des auf dem Datenträger (3) gespeicherten, mindestens einen personenbezogenen Dateneintrags mit dem im Behördenregister gespeicherten, mindestens einen personenbezogenen Dateneintrag erst nach Vergleich und Übereinstimmung von biometrischen Daten des Benutzers mit biometrischen Daten, die auf dem Datenträger (3) gespeichert sind, durchgeführt wird, wobei eine Einrichtung vorgesehen ist, mit der die biometrischen Daten des Benutzers erfaßt werden.

15. Vorrichtung nach Anspruch 14, **dadurch gekennzeichnet, daß** biometrische Daten Merkmale des Fingerabdrucks oder Merkmale des Gesichts sind.

16. Vorrichtung nach einem der Ansprüche 10 bis 15, **dadurch gekennzeichnet, daß** achte Mittel vorgesehen sind, so daß der auf dem Datenträger (3) gespeicherten, mindestens eine personenbezogene Dateneintrag verändert wird.

17. Vorrichtung nach einem der Ansprüche 10 bis 16, **dadurch gekennzeichnet, daß** Behördendienstleistungen die Abmeldung am alten Wohnort und/oder die Anmeldung am neuen Wohnort und/oder die Beantragung von Lohnsteuerkarten und/oder die Anmeldung von Kraftfahrzeugen und/oder die Abmeldung von Kraftfahrzeugen und/oder die Ummeldung von Kraftfahrzeugen umfaßt.

18. Verfahren nach einem der Ansprüche 10 bis 17, **dadurch gekennzeichnet, daß** der mindestens eine, auf dem Datenträger (3) gespeicherte, personenbezogene Dateneintrag der Vorname und/oder der Familienname und/oder der Geburtsname und/oder das Geburtsdatum und/oder der Geburtsort und/oder die Anschrift des Erstwohnsitzes und/oder die Anschrift des Zweitwohnsitzes und/oder das Geschlecht und/oder der Familienstand und/oder die Anzahl der Kinder ist.
